# EUROPEAN PATENT SPECIFICATION

(11) **EP 3 990 842 B1**
(45) Date of publication and mention of the grant of the patent: **28.08.2024**
(21) Application number: 20736829.1
(22) Date of filing: 16.06.2020
(51) Int. Cl.: F25D 11/00, F25D 17/04, A23B 7/00

(54) **REFRIGERATION UNIT WITH ATMOSPHERE CONTROL SYSTEM ACCESS PANEL**
KÜHLEINHEIT MIT ZUGANGSBLENDE FÜR ATMOSPHÄRENSTEUERUNGSSYSTEM
UNITÉ DE RÉFRIGÉRATION DOTÉE D'UN PANNEAU D'ACCÈS À UN SYSTÈME DE RÉGULATION D'ATMOSPHÈRE

(30) Priority: 28.06.2019 US 201962868068 P
(43) Date of publication of application: 04.05.2022
(60) Divisional application: 24189508.5
(73) Proprietor: Carrier Corporation, Palm Beach Gardens, FL 33418 (US)
(72) Inventor: HOFSDAL, Gilbert B., New York 13221 (US)
(74) Representative: Dehns
(86) International application number: PCT/US2020/037914
(87) International publication number: WO 2020/263622

(56) References cited:
- EP-A1- 3 179 183
- WO-A1-2015/038218
- WO-A1-2017/189420
- WO-A2-2011/130087
- US-A- 1 842 660

## Description

The subject matter disclosed herein relates to an atmosphere control system for a refrigerated container, and specifically to a system for regulating the atmosphere (e.g., amounts of nitrogen, oxygen, and/or carbon dioxide) inside a refrigerated container resulting in an atmospheric composition that extends post-harvest shelf life or quality of perishables, such as fruits, vegetables, pharmaceuticals, etc.

A typical refrigerated cargo container, such as those utilized to transport cargo via sea, rail or road, is a container modified to include a refrigeration unit located at one end of the container. The refrigeration unit includes a compressor, condenser, expansion valve and evaporator. A volume of refrigerant circulates throughout the refrigeration unit, and one or more evaporator fans of the refrigeration unit blow a flow of supply air across the evaporator thereby cooling the supply air and forcing it out into the container.

An atmosphere control system controls the amount of oxygen and carbon dioxide inside the refrigerated container to, for example, change the rate of ripening of produce stored in the container. The atmosphere control system may control the amount of oxygen (O2) and carbon dioxide (CO2) in the container.

WO 2017/189420 A1 discloses a refrigeration system comprising a compressor, a first heat exchanger, an intercooler heat exchanger, a second heat exchanger and an additional heat exchanger along the refrigerant flowpath between the compressor and the first heat exchanger.

EP 3179183 A1 discloses a container refrigeration apparatus including an exterior fan and a gas supply device. The gas supply device includes a unit case having a cooling air inlet port and a cooling air outlet port. The container refrigeration apparatus has an exhaust passage through which the unit case and a space on a suction side of the exterior fan are connected together such that the exterior fan sucks air through the cooling air outlet port out of the unit case.

In the invention, a refrigeration unit for use with a container includes a compressor, a condenser, an expansion device and an evaporator configured to circulate a refrigerant; a condenser section housing the condenser; an evaporator section housing the evaporator; and a removable access panel mounted to the evaporator section, the removable access panel serving as a mounting location for at least one component of an atmosphere control system, characterized in that the at least one component of the atmosphere control system comprises a sensor configured to measure a level of a gas in the container.

Optionally, the at least one component of the atmosphere control system comprises a water separator.

Optionally, the at least one component of the atmosphere control system comprises a valve, the valve, in an open position, directs compressed air to the container.

Optionally, the at least one component of the atmosphere control system comprises at least one filter.

Optionally, the at least one filter comprises a first filter and a second filter.

Optionally, the sensor comprises an oxygen sensor.

Optionally, the sensor comprises a carbon dioxide sensor.

Optionally, the removable access panel includes a return air opening configured to allow at least a portion of return air from the container to pass through the return air opening.

Optionally, the at least one component of the atmosphere control system is maintained at a temperature of an interior of the container.

Optionally, the removable access panel includes a supply air opening configured to supply compressed air to the container.

Technical effects of embodiments of the present disclosure include the ability to easily access components of an atmosphere control system mounted on a removable access panel. The components on the access panel are maintained at a uniform temperature to improve moisture removal of compressed air used in the atmosphere control system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 depicts a refrigerated container.
FIG. 2 depicts a refrigeration unit.
FIG. 3 depicts a refrigeration unit with an atmosphere control system.
FIG. 4 depicts an atmosphere control system.
FIG. 5 depicts an access panel of an atmosphere control system.
FIG. 6 is a side view of the access panel of an atmosphere control system.

The detailed description explains embodiments of the invention, together with advantages and features, by way of example with reference to the drawing.

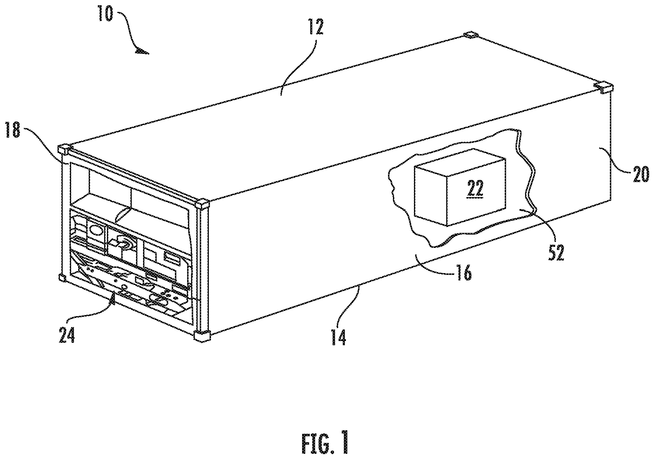

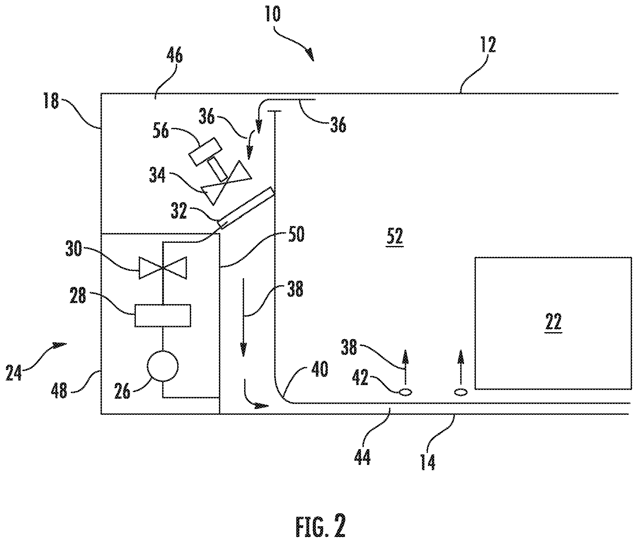

Shown in FIG. 1 is an embodiment of a refrigerated container 10. The container 10 has a generally rectangular construction, with a top wall 12, a directly opposed bottom wall 14, opposed side walls 16 and a front wall 18. The container 10 further includes a door or doors (not shown) at a rear wall 20, opposite the front wall 18. The container 10 is configured to maintain a cargo 22 located inside the container 10 at a selected temperature through the use of a refrigeration unit 24 located at the container 10. The container 10 is mobile and is utilized to transport the cargo 22 via, for example, a truck, a train or a ship. The container 10 may be integrated with a trailer. The refrigeration unit 24 is located at the front wall 18, and includes a compressor 26, a condenser 28, an expansion device 30 (e.g., a TXV or EXV), an evaporator 32 and an evaporator fan 34 (shown in FIG. 2), as well as other ancillary components.

Referring to FIG. 2, the refrigeration unit 24 flows return air 36 across the evaporator 32 via the evaporator fan 34, thus cooling the return air 36 to a selected temperature and urges the cooled return airflow 36, now referred to as supply air 38, through a refrigeration unit outlet 40 into the container 10 via, for example, openings 42 in one or more T-bars 44 extending along the bottom wall 14 of the container 10 to cool the cargo 22.

The refrigeration unit 24 is separated into an evaporator section 54 containing the evaporator 32, the evaporator fan 34 and an evaporator fan motor 56 and a condenser section 58 containing the compressor 26, the condenser 28 and the expansion device 30. The evaporator section 54, located above the condenser section 58 in some embodiments, is separated from the condenser section 58 by a panel 50 that extends across the refrigeration unit 24. The condenser section 58 is exposed to ambient air and may be covered by panels having openings formed therein. In operation, refrigerant is circulated in serial fashion through the compressor 26, the condenser 28, the expansion device 30, the evaporator 32 and back to the compressor 26. It is understood that the refrigeration unit 24 may include additional components (e.g., economizer, receiver, SMV, etc.) that are not shown.

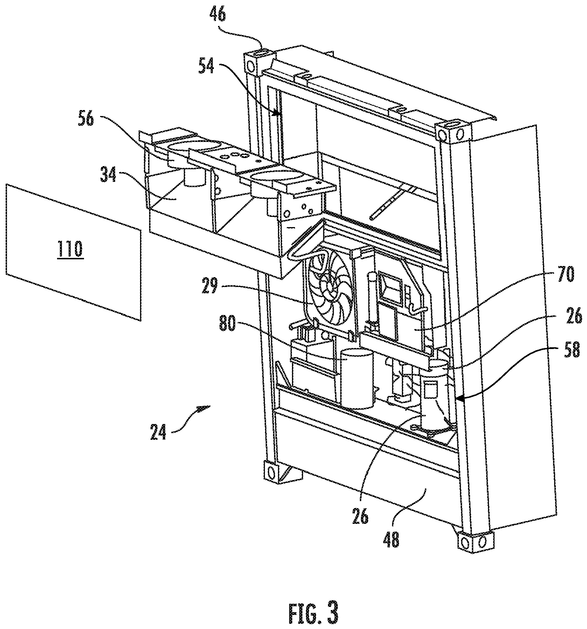

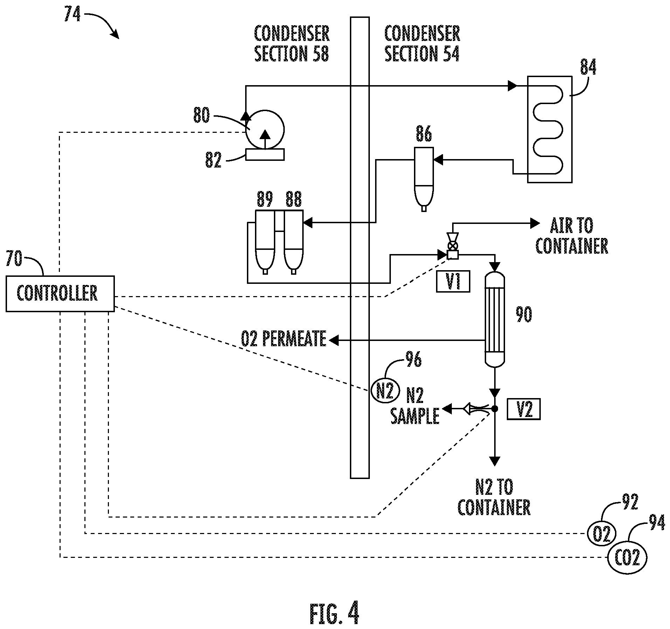

Referring now to FIG. 3, the refrigeration unit 24 includes a housing 46 to contain components of the refrigeration unit 24. In some embodiments, the housing 46 is separate and distinct from the container 10, while in other embodiments, the housing 46 is an integral part of the container 10. A condenser fan 29 is driven by a condenser motor (not shown) to drive air over the condenser 28 and discharge the air outside the refrigeration unit 24. The condenser 28 may be radially disposed about the condenser fan 29. A controller 70 controls operation of the refrigeration unit 24, for example, by controlling the compressor 26 (e.g., on/off/variable speed), evaporator fan motor 56 (e.g., on/off/variable speed), condenser fan motor (e.g., on/off/variable speed), etc. The controller 70 may be implemented user a processor-based device including a microprocessor, memory, user interface, I/O inputs, etc. The controller 70 controls components of the refrigeration unit 24 to maintain a desired temperature within the interior of the container 10, as known in the art. An air compressor 80 is located in the condenser section 58. The air compressor 80 is a component of an atmosphere control system 74 (FIG. 4) that operates to regulate atmosphere (e.g., oxygen and carbon dioxide) in the interior of the container 10. A removable access panel 110 may be used to cover the evaporator section 54 from the external environment. The removable access panel 110 may be mounted to the housing 46 by fasteners, such as bolts.

FIG. 4 depicts the atmosphere control system 74 in an example embodiment. The atmosphere control system 74 operates to control levels of at least one gas inside the container 10. In an embodiment, the atmosphere control system 74 operates to control levels of oxygen and/or carbon dioxide. The atmosphere control system 74 includes the air compressor 80 located in the condenser section 58 and thus outside the interior of the container 10. The controller 70 may turn on the air compressor 80 by sending a signal to a relay or contactor that applies power to the air compressor 80. When turned on, the air compressor 80 draws air from outside the container 10 through a first filter 82 (e.g., a 50 micron particulate filter). The compressed air produced by the air compressor 80 flows from the condenser section 58 into the evaporator section 54 to a heat exchanger 84. The heat exchanger 84 may be an air-cooled heat exchanger of various types (e.g., round tube plate fin, microchannel, etc.). At heat exchanger 84, the compressed air is cooled to facilitate water removal. From the heat exchanger 84, the compressed air flows to a water separator 86 where water is removed. From the water separator 86, the compressed air flows to a second filter 88 (e.g., a 5 micron particulate filter) and a third filter 89 (e.g., a 0.01 micron particulate filter). The second filter 88 and the third filter 89 may be located in the condenser section 58 or the evaporator section 54.

From the second filter 88 and the third filter 89, the compressed air flows to a first valve, V1. The first valve V1 has two outlets, which can be controlled by controller 70. When the first valve V1 is in a first position (e.g., an open position when energized), the compressed air is output from the first valve V1 to the interior of the container 10. The first valve V1 may be located to provide the air upstream of the evaporator 32. When the first valve V1 is in a second position (e.g., a closed position when not energized), the compressed air is directed to a separator 90. The separator 90 may be a membrane separator that generates an output of highly pure, separated nitrogen. Other atmospheric gases, including oxygen, argon and carbon dioxide, are vented to the condenser section 58 and outside of the refrigeration unit 24. The nitrogen from separator 90 is directed to a second valve V2. The second valve V2 may be located to provide the nitrogen upstream of the evaporator 32. The second valve V2 is a bleeder port that allows a small portion of the nitrogen from the separator 90 to be sent to a nitrogen sensor 96 to measure the purity of the nitrogen. The second valve V2 may be controlled by the controller 70.

When nitrogen is provided upstream of the evaporator 32, the nitrogen enters the interior of the container 10 and forces oxygen and carbon dioxide out of the interior of the container 10. Reducing the oxygen level in the container 10 reduces ripening of produce. Reducing the carbon dioxide level in the container 10 prevents damage to cargo 22 in the container 10 due to high carbon dioxide levels.

In operation, the controller 70 monitors levels of at least one gas inside the container 10, using oxygen sensor 92 and/or carbon dioxide sensor 94 in communication with the controller 70. The oxygen sensor 92 and/or carbon dioxide sensor 94 may be located in the evaporator section 54, upstream of the evaporator 32. To add outside air to the container 10, the controller 70 sends a signal to turn on the air compressor 80 and sends a signal to the first valve V1 to set the first valve V1 to the open position. This directs the compressed air from the air compressor 80 to the interior of the container 10. To add nitrogen to the container 10 to control the levels of other gasses, the controller 70 sends a signal to turn on the air compressor 80 and closes valve V1. This directs the compressed air from the air compressor 80 to the separator 90, which produces nitrogen that is directed to the interior of the container 10 (e.g., upstream or downstream of the evaporator 32). To measure purity of the nitrogen generated by the separator 90, the controller 70 opens the bleeder port of the second valve V2 to direct a portion of the nitrogen to the nitrogen sensor 96 in communication with the controller 70. In some embodiments, a separate nitrogen sensor 96 is not used, as the measurements from the oxygen sensor 92 provides an indication of the nitrogen level in the container 10.

Positioning the air compressor 80 in the condenser section 58 allows use of an air compressor not requiring an enclosed motor and enclosed crankcase, thereby allowing some acceptable amount of air blow (i.e., air leakage due to pressure and movement of the cylinders) from compressor crankcase. If a non-enclosed compressor was placed inside in the evaporator section 54, air blow from the compressor crankcase would directly impact system performance by not allowing proper control of oxygen. Positioning the air compressor 80 in the condenser section 58 also provides easier access for maintenance on the air compressor 80. A removable shield or plate can be used to protect the air compressor 80 from outside elements such as water and dirt, since the air compressor 80 is located in the condenser section 58 and not inside the container 10. The atmosphere control system 74 is controlled by the same controller 70 used to control the refrigeration unit 24, or by a separate controller.

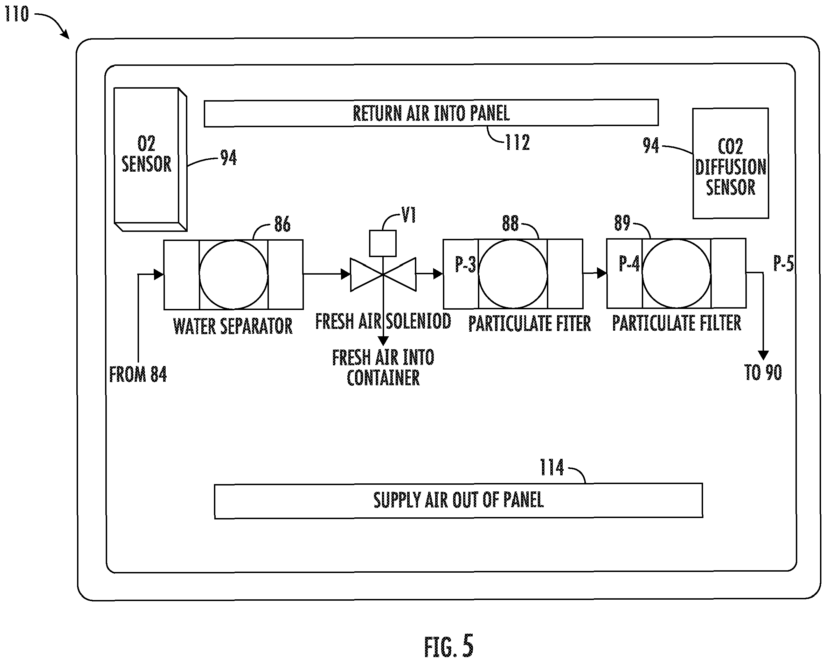

FIG. 5 depicts an inside surface of the removable access panel 110. The inside surface of the access panel 110 may serve as a mounting location for one or more components of the atmosphere control system 74. As shown in FIG. 5, the access panel 110 serves as a mounting location for the water separator 86, the first valve V1, the second filter 88 and the third filter 89. These components are all located in the evaporator section 54. Although FIG. 5 shows the water separator 86, the first valve V1, the second filter 88 and the third filter 89 mounted to the access panel 110, it is understood that other, or additional, components of the atmosphere control system 74 may be mounted to the access panel 110. For example, one or both of the heat exchanger 84 and the separator 90 may also be mounted on the access panel 110. Drain lines for one or more of the water separator 86, the second filter 88 and the third filter 89 may be run inside or outside of the evaporator section 54.

The access panel 110 includes a return air opening 112 configured such that a portion of return air from the container 10 passes through the return air opening 112. The oxygen sensor 92 and/or carbon dioxide sensor 94 may be mounted on the interior surface of the access panel 110 to sense gas levels in the return air. The access panel 110 also includes a supply air opening 114 so that compressed, fresh air from first valve V1 may be directed to the container 10. The supply air opening 114 may be located upstream or downstream of the evaporator 32.

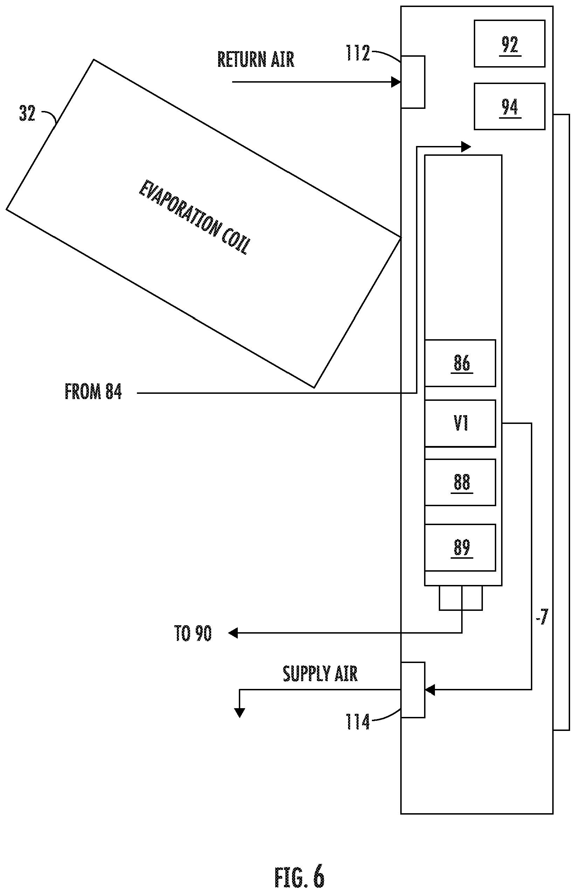

FIG. 6 is a side view of the access panel 110 of the atmosphere control system 74 in an example embodiment. Positioning the water separator 86, the second filter 88 and the third filter 89 inside the evaporator section 54 improves moisture removal due to a consistent temperature of the compressed air through the water separator 86, the second filter 88 and the third filter 89. Temperature changes across these components can hinder moisture removal due to changing dew point of the compressed air. Providing a return air opening 112 in the removable access panel 110 allows the components of the atmosphere control system 74 mounted on the removable access panel 110 to be at a substantially similar temperature (e.g., approximately the temperature of the interior of the container 10). The consistent temperature of the components of the atmosphere control system 74 mounted on the removable access panel 110 enhances moisture removal of the compressed air.

The removable access panel 110 also facilitates maintenance of the water separator 86, the second filter 88 and the third filter 89. The access panel 110 may be removed to drain the water separator 86 and/or to change the second filter 88 and the third filter 89. Preassembling components to the access panel 110 facilitates manufacturing and streamlines installation of the atmosphere control system 74 to the refrigeration unit 24.

While the invention has been described in detail in connection with only a limited number of embodiments, it should be readily understood that the invention is not limited to such disclosed embodiments.

Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A refrigeration unit (24) for use with a container (10), the refrigeration unit (24) comprising:
a compressor (26), a condenser (28), an expansion device (30) and an evaporator (32) configured to circulate a refrigerant;
a condenser section (58) housing the condenser (28);
an evaporator section (54) housing the evaporator (32); and
a removable access panel (110) mounted to the evaporator (32) section, the removable access panel (110) serving as a mounting location for at least one component of an atmosphere control system (74),
**characterized in that** the at least one component of the atmosphere control system (74) comprises a sensor configured to measure a level of a gas in the container (10).

2. The refrigeration unit (24) of claim 1 wherein:
the at least one component of the atmosphere control system (74) comprises a water separator (86).

3. The refrigeration unit (24) of claim 1 wherein:
the at least one component of the atmosphere control system (74) comprises a valve (V1), the valve (V1), in an open position, directs compressed air to the container (10).

4. The refrigeration unit (24) of claim 1 wherein:
the at least one component of the atmosphere control system (74) comprises at least one filter.

5. The refrigeration unit (24) of claim 4 wherein:
the at least one filter comprises a first filter (82) and a second filter (88).

6. The refrigeration unit (24) of claim 1 wherein:
the sensor comprises an oxygen sensor (92).

7. The refrigeration unit (24) of claim 1 wherein:
the sensor comprises a carbon dioxide sensor (94).

8. The refrigeration unit (24) of claim 1 wherein:
the removable access panel (110) includes a return air opening (112) configured to allow at least a portion of return air from the container (10) to pass through the return air opening (112).

9. The refrigeration unit (24) of claim 8 wherein:
the at least one component of the atmosphere control system (74) is maintained at a temperature of an interior of the container (10).

10. The refrigeration unit (24) of claim 1 wherein:
the removable access panel (110) includes a supply air opening (114) configured to supply compressed air to the container (10).

## Patentansprüche

1. Kühleinheit (24) zur Verwendung mit einem Behälter (10), wobei die Kühleinheit (24) Folgendes umfasst:
einen Verdichter (26), einen Verflüssiger (28), eine Expansionsvorrichtung (30) und einen Verdampfer (32), die dazu konfiguriert sind, ein Kältemittel zu zirkulieren;
eine Verflüssigersektion (58), die den Verflüssiger (28) aufnimmt;
eine Verdampfersektion (54), die den Verdampfer (32) aufnimmt; und
eine abnehmbare Zugangsblende (110), die an der Verdampfersektion (32) montiert ist, wobei die abnehmbare Zugangsblende (110) als ein Montageort für mindestens eine Komponente eines Atmosphärensteuerungssystems (74) dient,
**dadurch gekennzeichnet, dass** die mindestens eine Komponente des Atmosphärensteuerungssystems (74) einen Sensor umfasst, der dazu konfiguriert ist, einen Gaspegel in dem Behälter (10) zu messen.

2. Kühleinheit (24) nach Anspruch 1, wobei:
die mindestens eine Komponente des Atmosphärensteuerungssystems (74) einen Wasserabscheider (86) umfasst.

3. Kühleinheit (24) nach Anspruch 1, wobei:
die mindestens eine Komponente des Atmosphärensteuerungssystems (74) ein Ventil (V1) umfasst, wobei das Ventil (V1) in einer offenen Position Druckluft zu dem Behälter (10) leitet.

4. Kühleinheit (24) nach Anspruch 1, wobei:
die mindestens eine Komponente des Atmosphärensteuerungssystems (74) mindestens einen Filter umfasst.

5. Kühleinheit (24) nach Anspruch 4, wobei:
der mindestens eine Filter einen ersten Filter (82) und einen zweiten Filter (88) umfasst.

6. Kühleinheit (24) nach Anspruch 1, wobei:
der Sensor einen Sauerstoffsensor (92) umfasst.

7. Kühleinheit (24) nach Anspruch 1, wobei:
der Sensor einen Kohlendioxidsensor (94) umfasst.

8. Kühleinheit (24) nach Anspruch 1, wobei:
die abnehmbare Zugangsblende (110) eine Rückluftöffnung (112) beinhaltet, die dazu konfiguriert ist, mindestens einen Abschnitt der Rückluft aus dem Behälter (10) durch die Rückluftöffnung (112) strömen zu lassen.

9. Kühleinheit (24) nach Anspruch 8, wobei:
die mindestens eine Komponente des Atmosphärensteuerungssystems (74) auf einer Temperatur des Innenraums des Behälters (10) gehalten wird.

10. Kühleinheit (24) nach Anspruch 1, wobei:
die abnehmbare Zugangsblende (110) eine Zuluftöffnung (114) beinhaltet, die dazu konfiguriert ist, den Behälter (10) mit Druckluft zu versorgen.

## Revendications

1. Unité de réfrigération (24) destinée à être utilisée avec un récipient (10), l'unité de réfrigération (24) comprenant :
un compresseur (26), un condenseur (28), un dispositif d'expansion (30) et un évaporateur (32) conçus pour faire circuler un réfrigérant ;
une section de condenseur (58) logeant le condenseur (28) ;
une section d'évaporateur (54) logeant l'évaporateur (32) ; et
un panneau d'accès amovible (110) monté sur la section évaporateur (32), le panneau d'accès amovible (110) servant d'emplacement de montage pour au moins un composant d'un système de régulation d'atmosphère (74),
**caractérisée en ce que** l'au moins un composant du système de régulation d'atmosphère (74) comprend un capteur conçu pour mesurer un niveau d'un gaz dans le récipient (10).

2. Unité de réfrigération (24) selon la revendication 1, dans laquelle :
l'au moins un composant du système de régulation d'atmosphère (74) comprend un séparateur d'eau (86).

3. Unité de réfrigération (24) selon la revendication 1, dans laquelle :
l'au moins un composant du système de régulation d'atmosphère (74) comprend une soupape (V1), la soupape (V1), dans une position ouverte, dirige l'air comprimé vers le récipient (10).

4. Unité de réfrigération (24) selon la revendication 1, dans laquelle :
l'au moins un composant du système de régulation d'atmosphère (74) comprend au moins un filtre.

5. Unité de réfrigération (24) selon la revendication 4, dans laquelle :
l'au moins un filtre comprend un premier filtre (82) et un second filtre (88).

6. Unité de réfrigération (24) selon la revendication 1, dans laquelle :
le capteur comprend un capteur d'oxygène (92).

7. Unité de réfrigération (24) selon la revendication 1, dans laquelle :
le capteur comprend un capteur de dioxyde de carbone (94).

8. Unité de réfrigération (24) selon la revendication 1, dans laquelle :
le panneau d'accès amovible (110) comporte une ouverture d'air de retour (112) conçue pour permettre à au moins une partie de l'air de retour provenant du récipient (10) de passer à travers l'ouverture d'air de retour (112).

9. Unité de réfrigération (24) selon la revendication 8, dans laquelle :
l'au moins un composant du système de régulation d'atmosphère (74) est maintenu à une température d'un intérieur du récipient (10) .

10. Unité de réfrigération (24) selon la revendication 1, dans laquelle :
le panneau d'accès amovible (110) comporte une ouverture d'air d'alimentation (114) conçue pour alimenter le récipient (10) en air comprimé.
